# EUROPÄISCHE PATENTSCHRIFT

(11) **EP 2 607 012 B1**
(45) Veröffentlichungstag und Bekanntmachung des Hinweises auf die Patenterteilung: **08.04.2015**
(21) Anmeldenummer: 12157462.8
(22) Anmeldetag: 29.02.2012
(51) Int. Cl.: B23K 11/31

(54) **Schweißeinrichtung zum elektrischen Widerstandsschweißen mit einem zusätzlichen Elektromagneten zum Beaufschlagen einer wirkenden Kraft in Schliessrichtung**
Welding device for electric resistance welding with a supplementary electromagnet for providing a load in the closing direction
Dispositif de soudage destiné au soudage électrique par résistance avec un électroaimant supplémentairre pour créer une force dans la direction de fermeture

(30) Priorität: 20.12.2011 DE 102011056717
(43) Veröffentlichungstag der Anmeldung: 26.06.2013
(73) Patentinhaber: Nimak GmbH, 57537 Wissen (DE)
(72) Erfinder: Rödder, Bernd, 57587 Honigsessen (DE); Steudter, Johannes, 56414 Oberahr (DE)
(74) Vertreter: Patentanwälte Dr. Solf & Zapf

(56) Entgegenhaltungen:
- DE-A1-102008 051 289
- DE-U1-202008 013 883
- FR-A1- 2 837 413
- US-A- 2 863 985
- US-A- 2 863 986

## Beschreibung

Die vorliegende Erfindung betrifft gemäß dem Oberbegriff des unabhängigen Anspruchs 1 eine Schweißeinrichtung zum elektrischen Widerstandsschweißen, mit zwei Elektrodenhaltern für zwei mit einem elektrischen Schweißstrom beaufschlagbare Schweißelektroden, wobei mindestens einer der zwei Elektrodenhalter über einen Linearantrieb derart bewegbar ist, dass die Schweißelektroden unter Zwischenlage von zu verschweißenden Bauteilen in einer Schließrichtung zusammenführbar sind.

Derartige Schweißeinrichtungen sind zum Widerstandsschweißen im Punkt- oder Buckelschweißverfahren allgemein bekannt; sie können als bewegliche Schweißzangen - siehe beispielsweise das Dokument DE 20 2008 013 883 U1 sowie auch DE 20 2008 013 884 U1 - oder als stationäre Schweißmaschinen ausgebildet sein. Zum Verschweißen von zwei Bauteilen, insbesondere Metallblechen, werden zwei gegenüberliegende Schweißelektroden über Elektrodenhalter unter Zwischenlage der Bauteile zusammengeführt, mit einer mechanischen Presskraft und dann mit einem elektrischen Schweißstrom beaufschlagt. Der hohe Schweißstrom fließt im Kontaktbereich der Elektroden durch die Bauteile, die dadurch aufgeschmolzen und nach einem anschließenden Abkühlen stoffschlüssig verbunden, d. h. miteinander verschweißt werden.

Solche Schweißeinrichtungen können eine C-Bauform oder eine X-Bauform haben. Bei der C-Bauweise sind die Elektrodenhalter an gegenüberliegenden Enden eines C-förmigen Rahmens gehalten, wobei die eine Elektrode über einen Linearantrieb in gleichachsiger Richtung linear gegen die andere, ortsfeste Elektrode bewegbar ist. Bei der X-Bauweise ist mindestens einer der Elektrodenhalter an einer schwenkbar gelagerten, wippenartigen Schwinge angeordnet, wobei ein Linearantrieb an der Schwinge angreift, um die bewegliche Elektrode gegen die andere Elektrode zu verschwenken.

Bei bekannten Punkt- und Buckelschweißeinrichtungen erfolgt einerseits die Schließbewegung der Elektroden bis zu deren Werkstück-Anlage, andererseits aber auch eine für den Schweißvorgang erforderliche Kraftbeaufschlagung über mindestens einen Linearantrieb, der als hydraulischer oder pneumatischer Druckzylinder oder als servoelektrischer Antriebsmotor ausgebildet sein kann. Der Linearantrieb muss daher sowohl für eine möglichst schnelle Schließ- und Öffnungsbewegung der Elektroden, andererseits aber auch für die erforderliche Presskraft ausgelegt sein, so dass der Linearantrieb wegen dieser Anforderungen recht aufwändig und folglich teuer ist. Außerdem sind übliche Linearantriebe für die Presskraft-Beaufschlagung in aller Regel sehr träge.

Aus der US 2,863,985 und der US 2,863,986 ist die Verwendung eines Elektromagneten zum Antrieb eines Elektrodenhalters einer Schweißeinrichtung zum elektrischen Widerstandsschweißen bekannt. Diese hat den Nachteil, dass der Elektrodenhalter ausschließlich durch den Elektromagneten angetrieben wird, wodurch die Zustellbewegung des angetriebenen Elektrodenhalters nicht besonders fein einstellbar ist. Zudem wird der Schweißstrom verwendet, um den Elektromagneten zu steuern, was eine nachteilige direkte Abhängigkeit zwischen der Höhe des Schweißstroms und der Ansteuerung des Elektromagneten verursacht. Dadurch ist die Höhe des Schweißstroms nicht unabhängig von der Schweißkraft des Elektromagneten regelbar.

In der DE 10 2008 051289 A1 wird eine Schweißeinrichtung beschrieben, bei der ein Elektromagnet als magnetischer Halter eines metallischen Werkstücks fungiert.

Aus der FR 2 837 413 A1 ist eine Schweißeinrichtung zum elektrischen Widerstandsschweißen bekannt, bei der der Elektrodenhalter über einen Elektromagneten mit einer in Elektroden-Schließrichtung wirkenden Kraft beaufschlagbar ist, wobei der Elektromagnet auf der Seite des über den Linearantrieb bewegbaren Elektrodenhalters oberhalb dieses Elektrodenhalters und parallel zu dem Linearantrieb angeordnet ist, Dies hat den Nachteil einer konstruktiv aufwändigen und relativ viel Bauraum benötigenden Anbindung des Elektromagneten und des Linearantriebs an den selben Elektrodenhalter.

Der vorliegenden Erfindung liegt die Aufgabe zu Grunde, eine Schweißeinrichtung der genannten, gattungsgemäßen Art so zu verbessern, dass mit einfachen und wirtschaftlichen Mitteln der für den eigentlichen Schweißvorgang erforderliche Aufbau einer Elektroden-Anpresskraft schneller, genauer und gezielter während des Schweißprozesses steuerbar ist.

Eine Schweißeinrichtung gemäß der Erfindung ist im Anspruch 1 definiert.

Vorteilhafte Weiterbildungen der Erfindung sind in den abhängigen Ansprüchen sowie auch in der anschließenden Beschreibung enthalten.

Erfindungsgemäß ist demnach ein kombinierter Elektrodenantrieb vorgesehen, wobei der bisherige Linearantrieb beibehalten wird, dieser muss allerdings nur noch für die Schließ- und Öffnungsbewegungen ausgelegt sein, nicht aber für die Erzeugung der Anpresskraft. Daher kann ein relativ einfacher und daher kostengünstiger Linearantrieb eingesetzt werden, der zudem für die schnellen Schließ- und Öffnungsbewegungen optimiert sein kann. Erfindungsgemäß ist in Kombination mit dem Linearantrieb zum Aufbau der erforderlichen Anpresskraft mindestens ein Elektromagnet vorgesehen. Dies führt zu dem Vorteil, dass durch eine entsprechende elektrische Ansteuerung des Elektromagneten durch Vorgabe von bestimmten Parametern die Anpresskraft innerhalb des Schweißprozesses sehr genau steuerbar und auch programmierbar ist. Dadurch kann ein sehr schneller, dynamischer Kraftaufbau mit einem optimierten Kraftprofil erreicht werden. So konnten im praktischen Einsatz beispielsweise 5 kN innerhalb von nur 20 ms erreicht werden.

Der Elektromagnet muss somit in erster Linie für den Kraftaufbau ausgelegt sein. Zusätzlich ist es vorteilhaft, den Elektromagneten für einen kurzen Weg, und zwar für eine so genannte Elektroden-Nachsetzbewegung auszulegen. Dies bedeutet, dass während des Schweißprozesses beim Aufschmelzen der Bauteile die Elektroden durch die Anpresskraft geringfügig weiter zusammenbewegt werden, um das Anpressen der Bauteile trotz der Aufschmelzung aufrechtzuerhalten. Auch für diese Nachsetzbewegung ist die erfindungsgemäße Verwendung eines Elektromagneten besonders vorteilhaft.

Es ist aber auch möglich, zwei Elektromagnete einzusetzen, jeweils einen auf der Seite jeder der beiden Elektroden. Dies erlaubt eine besonders individuelle Steuerung des Kraftaufbaus und des Kraftprofils während des Schweißprozesses.

Bei der erfindungsgemäßen Schweißeinrichtung ist demnach der Linearantrieb praktisch in mechanischer Reihenschaltung mit mindestens einem Elektromagneten angeordnet. Deshalb muss für die Anpresskraft-Beaufschlagung der Elektroden darauf geachtet werden, dass der Linearantrieb im Stillstand gegen Bewegungen blockiert ist. Dies kann durch Einsatz eines selbstsperrenden Antriebs und/oder durch eine zusätzliche Blockiereinrichtung erreicht werden, wobei die Blockiereinrichtung als eine Art Bremse mit elektromagnetischer, elektromotorischer, elektrorheologischer, pneumatischer oder hydraulischer Betätigung oder mit einer Piezobetätigung ausgebildet sein kann.

Die Erfindung eignet sich für Schweißeinrichtungen sowohl in C-Bauform als auch in X-Bauform.

Anhand der angefügten Zeichnungen soll im Folgenden die Erfindung beispielhaft für eine C-Bauform genauer erläutert werden. Es zeigen:
- Fig. 1: eine stark schematische Seitenansicht einer Schweißeinrichtung, die nicht Teil der Erfindung ist,
- Fig. 2: eine zweite Ausführung der Schweißeinrichtung in einer Darstellung analog zu Fig. 1 und
- Fig. 3: eine dritte Ausführung der erfindungsgemäßen Schweißeinrichtung analog zu den Darstellungen in Fig. 1 und 2.

In den verschiedenen Figuren der Zeichnung sind gleiche Teile stets mit den gleichen Bezugszeichen versehen.

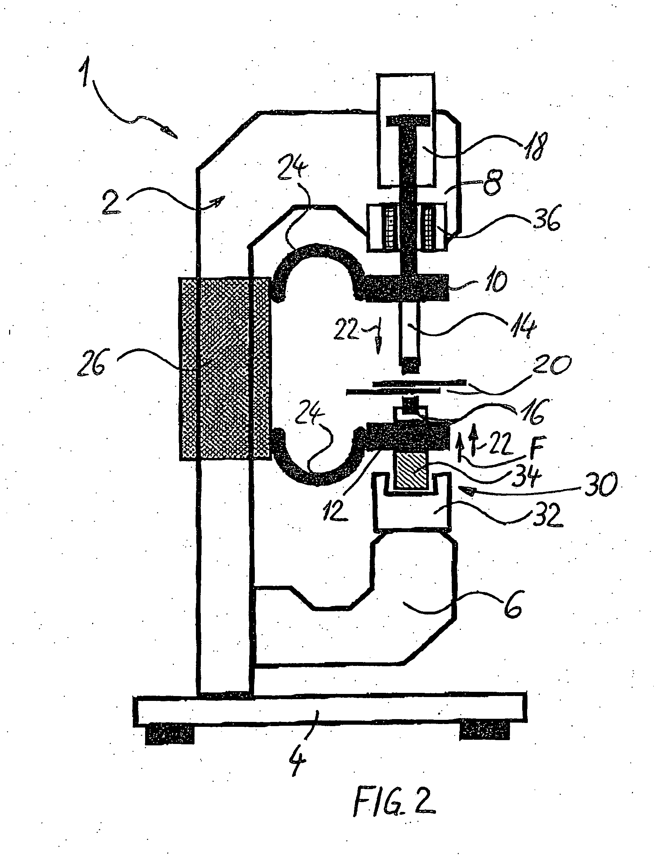

Eine Schweißeinrichtung 1 ist in den Ausführungsbeispielen gemäß Fig. 2 bis 3 als stationäre Schweißmaschine ausgebildet, die ein etwa C-förmiges Maschinengestell 2 und ein unteres Fußteil 4 zum ortsfesten Aufstellen auf einem Boden aufweist.

Grundsätzlich kann aber die Schweißeinrichtung 1 auch als im Raum bewegliche Schweißzange, beispielsweise Roboter-Schweißzange, und/oder auch in X-Bauweise - wie eingangs erläutert - ausgebildet sein.

Das Maschinengestell 2 weist ein erstes, unteres Widerlager 6 und ein gegenüberliegendes zweites, oberes Widerlager 8 auf. An diesen Widerlagern 6, 8 sind zwei Elektrodenhalter 10, 12 für zwei Schweißelektroden 14, 16 angeordnet. Mindestens einer der beiden Elektrodenhalter 10, 12, in den dargestellten Beispielen der obere Elektrodenhalter 10, ist über einen Linearantrieb 18 derart bewegbar, dass die Schweißelektroden 14, 16 einerseits unter Zwischenlage von zu verschweißenden Bauteilen 20 geschlossen werden können, d. h. in einer Schließrichtung 22 zusammenführbar sind, und andererseits auch in einer umgekehrten Öffnungsrichtung wieder geöffnet, d. h. voneinander weg bewegt werden können. Für einen Schweißprozess werden die Elektroden 14, 16 bei Anlage an den Bauteilen 20 zunächst mit einer mechanischen Anpresskraft und anschließend mit einem elektrischen Schweißstrom beaufschlagt. Dazu sind die Elektrodenhalter 10, 12 über jeweils einen Stromleiter 24 mit einem Schweißtransformator 26 verbunden. Der gesamte Schweißprozess wird von einer nicht dargestellten Steuereinheit gesteuert.

Erfindungsgemäß ist nun vorgesehen, dass zumindest einer der zwei Elektrodenhalter 10, 12 über einen zusätzlichen Elektromagnet 30 mit einer in Elektroden-Schließrichtung 22 wirkenden Kraft F beaufschlagbar ist.

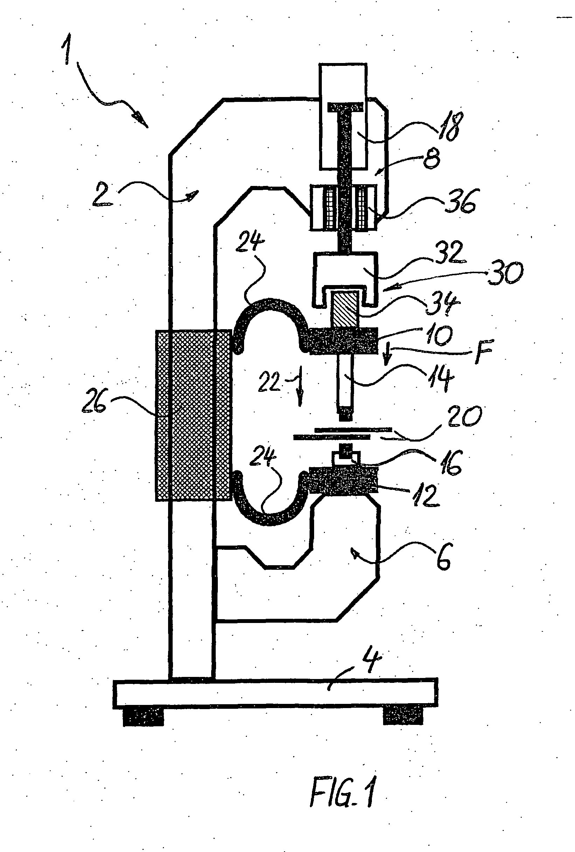

In der Fig. 1, die nicht Teil der Erfindung darstellt, ist der Elektromagnet. 30 auf der Seite des einen, über den Linearantrieb 18 bewegbaren Elektrodenhalters 10 zwischen diesem und dem Linearantrieb 18 angeordnet. In einer nicht dargestellten Variante kann der Elektromagnet 30 auch zwischen dem Linearantrieb 18 und dem oberen Widerlager 8 des Maschinengestells 2 angeordnet sein. Dabei stützt sich folglich der Elektromagnet 30 am Widerlager 8 ab, und der Linearantrieb 18 ist zwischen dem Elektromagnet 30 und dem Elektrodenhalter 10 angeordnet, so dass bei Ansteuerung des Elektrodenmagneten 30 der Elektrodenhalter 10 mittelbar über den Linearantrieb 18 mit der Kraft F beaufschlagt wird.

In der Ausführung der Erfindung gemäß Fig. 2 ist der Elektromagnet 30 auf der Seite des anderen, dem über den Linearantrieb 18 bewegbaren Elektrodenhalter 10 gegenüberliegenden Elektrodenhalters 12 zwischen diesem und dem Widerlager 6 angeordnet.

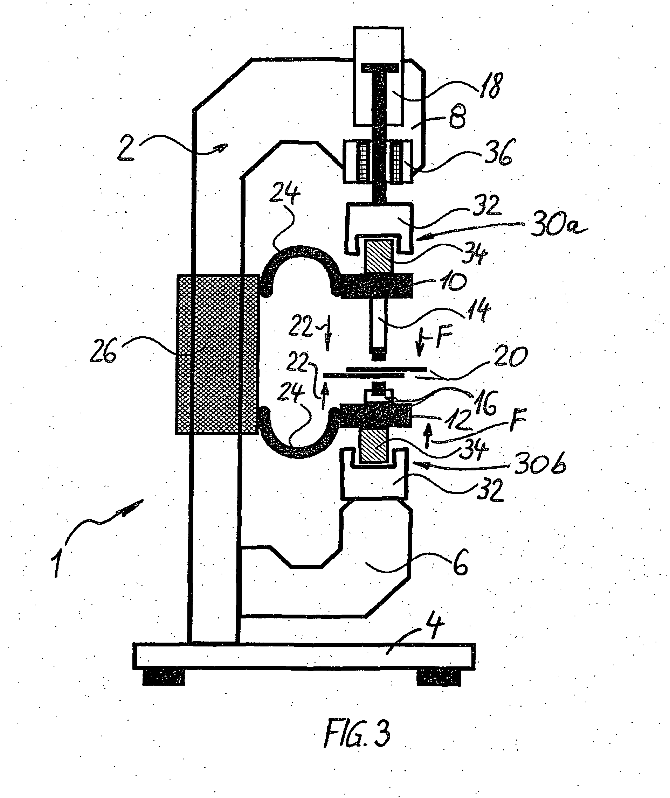

Die in Fig. 3 veranschaulichte Ausführungsform kombiniert die beiden Varianten gemäß Fig. 1 und 2. Dies bedeutet, dass beiden Elektrodenhaltern 10, 12 jeweils ein Elektromagnet 30 zugeordnet ist. Die somit vorgesehenen zwei Elektromagnete 30 sind daher in Fig. 3 mit den Bezugszeichen 30a und 30b gekennzeichnet. Hierbei entspricht die Anordnung des oberen Elektromagneten 30a der Ausführung gemäß Fig. 1, während der untere Elektromagnet 30b der Ausführung gemäß Fig. 2 entspricht. Allerdings kann dabei der obere Elektromagnet 30a alternativ auch zwischen dem Widerlager 8 und dem Linearantrieb 18 angeordnet sein, wie dies zuvor als Alternative zu Fig. 1 beschrieben ist.

Der bzw. jeder Elektromagnet 30 bzw. 30a, 30b besteht aus einem Joch 32 und einem dazu beweglichen Anker 34. Das Joch 32 weist mindestens eine nicht bezeichnete Spule auf, die zur Betätigung des Ankers 34 mit einem elektrischen Strom beaufschlagbar ist. Vorzugsweise ist jeweils der Elektromagnet 30 so orientiert, dass der Anker 34 auf der dem jeweiligen Elektrodenhalter 10 bzw. 12 zugewandten Seite angeordnet ist, wobei jeweils das Joch 32 auf der gegenüberliegenden, dem jeweiligen Widerlager 6, 8 zugewandten Seite angeordnet ist. Grundsätzlich ist aber auch eine umgekehrte Orientierung des/jedes Elektromagneten 30 möglich. Der Anker 34 besteht aus einem permanentmagnetischen Material oder als Eisenkern aus einem ferromagnetischen Material. Alternativ kann der Elektromagnet 30 auch "kinematisch umgekehrt" aufgebaut sein, d. h. die Spule kann im beweglichen Anker 34 angeordnet sein, und das stehende Joch 32 kann aus einem permanentmagnetischen oder ferromagnetischen Material bestehen. Auch eine Variante mit zwei Spulen, einer feststehenden Spule im Joch 32 und einer mit dem Anker 34 beweglichen Spule, ist möglich.

Gemäß der Erfindung ist vorgesehen, dass der Linearantrieb 18 gegen Bewegungen im Stillstand selbstsperrend ausgebildet oder über eine zusätzliche Blockiereinrichtung 36 sperrbar ist. Dadurch wird eine Abstützung erreicht, um über den oder die Elektromagnete 30; 30a; 30b die Anpresskraft F für die Bauteile 20 erzeugen zu können. Wie eingangs schon erwähnt wurde, kann die Blockiereinrichtung 36 nach Art einer Bremse mit einer beliebigen, beispielsweise hydraulischen oder pneumatischen Betätigung ausgebildet sein.

Wie ebenfalls zuvor schon allgemein erwähnt wurde, kann der/jeder Elektromagnet für eine Elektroden-Nachsetzbewegung so ausgelegt sein, dass der Anker 34 bei elektromagnetischer Ansteuerung einen kurzen Weg bzw. Anker-Hub von bis zu 5 mm ausführen kann. Für bestimmte Anwendungsfälle, insbesondere für eine Ausführung, bei der der Elektromagnet 30/30a zwischen dem Linearantrieb 18 und dem Widerlager 8 angeordnet ist, kann der Bewegungsbereich bzw. Anker-Hub des Elektromagneten auch bis zu 15 mm betragen.

Abschließend sei nochmals erwähnt, dass der erfindungsgemäße kombinierte Antrieb in allen beschriebenen Varianten auch bei einer Schweißvorrichtung oder Schweißzange mit X-Bauform angewandt werden kann, um eine Schweißelektrode über eine gelenkig gelagerte Schwinge zu verschwenken und mit der erforderlichen Kraft zu beaufschlagen.

Die Erfindung ist demnach nicht auf die dargestellten und beschriebenen Ausführungsbeispiele beschränkt, sondern umfasst auch alle im Sinne der Erfindung gleichwirkende Ausführungen, die in den Ansprüchen definiert sind.

## Patentansprüche

1. Schweißeinrichtung (1) zum elektrischen Widerstandsschweißen, mit zwei Elektrodenhaltern (10, 12) für zwei mit einem elektrischen Schweißstrom beaufschlagbare Schweißelektroden (14, 16), wobei einer der zwei Elektrodenhalter (10) über einen Linearantrieb (18) derart bewegbar ist, dass die Schweißelektroden (14, 16) unter Zwischenlage von zu verschweißenden Bauteilen (20) in einer Schließrichtung (22) zusammenführbar sind, **dadurch gekennzeichnet, dass** zumindest einer der zwei Elektrodenhalter (10, 12) über einen Elektromagneten (30) mit einer in Elektroden-Schließrichtung (22) wirkenden Kraft (F) beaufschlagbar ist,
wobei der Elektromagnet (30) auf der Seite des anderen, dem über den Linearantrieb (18) bewegbaren Elektrodenhalter (10) gegenüberliegenden Elektrodenhalters (12) zwischen diesem und einem Widerlager (6) angeordnet ist, und der Linearantrieb (18) gegen Bewegungen im Stillstand selbstsperrend ausgebildet oder über eine zusätzliche Blockiereinrichtung (36) sperrbar ist.

2. Schweißeinrichtung nach Anspruch 1,
**dadurch gekennzeichnet, dass** ein zusätzlicher Elektromagnet (30) auf der Seite des einen, über den Linearantrieb (18) bewegbaren Elektrodenhalters (10) zwischen diesem und dem Linearantrieb (18) oder zwischen dem Linearantrieb (18) und einem Widerlager (8) angeordnet ist.

3. Schweißeinrichtung nach einem der Ansprüche 1 oder 2,
**dadurch gekennzeichnet, dass** der/jeder Elektromagnet (30 / 30a, 30b) aus einem Joch (32) und einem dazu beweglichen Anker (34) besteht, wobei der Anker (34) insbesondere auf der dem Elektrodenhalter (10, 12) zugewandten Seite angeordnet ist.

4. Schweißeinrichtung nach einem der Ansprüche 1 bis 3,
**dadurch gekennzeichnet, dass** der/jeder Elektromagnet (30; 30a, 30b) über eine Steuereinheit in Anpassung an den Schweißvorgang hinsichtlich seines Kraftprofils und einer optionalen Elektroden-Nachsetzbewegung ansteuerbar ist.

5. Schweißeinrichtung nach einem der Ansprüche 1 bis 4,
**gekennzeichnet durch** eine C-Bauweise mit einem C-förmigen Maschinengestell (2) mit einem ersten Widerlager (6) und einem gegenüberliegenden zweiten Widerlager (8), wobei das zweite Widerlager (8) den Linearantrieb (18) mit dem einen Elektrodenhalter (10) trägt und das erste Widerlager (6) den anderen, gegenüberliegenden Elektrodenhalter (12).

6. Schweißeinrichtung nach einem der Ansprüche 1 bis 5,
**gekennzeichnet durch** eine X-Bauweise, wobei mindestens einer der beiden Elektrodenhalter (10, 12) über eine Schwinge schwenkbar ist, wozu der Linearantrieb direkt oder indirekt an der Schwinge angreift.

## Claims

1. Welding device (1) for electric resistance welding, with two electrode holders (10, 12) for two welding electrodes (14, 16) that can be provided with an electric welding current, wherein one of the two electrode holders (10) can be moved via a linear drive (18) in such a way that the welding electrodes (14, 16) can be brought together in a closing direction (22) with the interposition of structural parts (20) to be welded, **characterised in that** at least one of the two electrode holders (10, 12) can be provided via an electromagnet (30) with a force (F) acting in the electrode closing direction (22), wherein the electromagnet (30) on the side of the other electrode holder (12) opposite the electrode holder (10) moveable via the linear drive (18) is arranged between this and an abutment (6), and the linear drive (18) is designed to be self-locking against movement when stationary or can be locked via an additional blocking device (36).

2. Welding device according to claim 1, **characterised in that** an additional electromagnet (30) on the side of the electrode holder (10) moveable via the linear drive (18) is arranged between this and the linear drive (18) or between the linear drive (18) and an abutment (8).

3. Welding device according to one of claims 1 and 2, **characterised in that** the/each electromagnet (30/30a, 30b) consists of a yoke (32) and an anchor (34) moveable relative thereto, wherein the anchor (34) is arranged in particular on the side facing towards the electrode holder (10, 12).

4. Welding device according to one of claims 1 to 3, **characterised in that** the/each electromagnet (30; 30a, 30b) can be controlled via a control unit as regards its force profile and an optional electrode reset movement so as to adapt to the welding process.

5. Welding device according to one of claims 1 to 4, **characterised by** a C-shaped structure with a C-shaped machine frame (2) with a first abutment (6) and an opposite second abutment (8), wherein the second abutment (8) carries the linear drive (18) with the electrode holder (10) and the first abutment (6) carries the other, opposite electrode holder (12).

6. Welding device according to one of clams 1 to 5, **characterised by** an X-shaped construction, wherein at least one of the two electrode holders (10, 12) can be pivoted via a rocker, for which purpose the linear drive directly or indirectly engages the rocker.

## Revendications

1. Dispositif de soudage (1) destiné au soudage électrique par résistance, comprenant deux porte-électrodes (10, 12) pour deux électrodes de soudage (14, 16) pouvant être soumises à l'action d'un courant de soudage électrique, dans lequel un des deux porte-électrodes (10) peut être déplacé par l'intermédiaire d'un entraînement linéaire (18) de telle manière que les électrodes de soudage (14, 16) peuvent être rassemblées en intercalant des composants (20) à souder dans une direction de fermeture (22), **caractérisé en ce qu'**au moins un des deux porte-électrodes (10, 12) peut être soumis à l'action d'une force (F) agissant dans une direction de fermeture d'électrodes (22) par l'intermédiaire d'un électroaimant (30),
dans lequel l'électroaimant (30) est disposé sur le côté de l'autre porte-électrodes (12) faisant face au porte-électrodes (10) pouvant être déplacé par l'intermédiaire de l'entraînement linéaire (18) entre l'autre porte-électrodes et un contre-palier (6), et **en ce que** l'entraînement linéaire (18) est réalisé de manière à exercer une action de blocage empêchant tout mouvement à l'arrêt ou peut être bloqué par l'intermédiaire d'un dispositif de blocage (36) supplémentaire.

2. Dispositif de soudage selon la revendication 1,
**caractérisé en ce qu'**un électroaimant (30) supplémentaire est disposé sur le côté d'un des porte-électrodes (10) pouvant être déplacé par l'intermédiaire de l'entraînement linéaire (18) entre ledit porte-électrodes et l'entraînement linéaire (18) ou entre l'entraînement linéaire (18) et un contre-palier (8).

3. Dispositif de soudage selon l'une quelconque des revendications 1 ou 2,
**caractérisé en ce que** l'électroaimant / chaque électroaimant (30/30a, 30b) est constitué d'une culasse (32) et d'un induit (34) mobile par rapport à ce dernier, dans lequel l'induit (34) est disposé en particulier sur le côté tourné vers le porte-électrodes (10, 12).

4. Dispositif de soudage selon l'une quelconque des revendications 1 à 3,
**caractérisé en ce que** l'électroaimant / chaque électroaimant (30 ; 30a, 30b) peut être commandé par l'intermédiaire d'une unité de commande en s'adaptant à une opération de soudage par rapport à son profil de force et à un mouvement de recharge optionnel des électrodes.

5. Dispositif de soudage selon l'une quelconque des revendications 1 à 4,
**caractérisé par** une structure en C comprenant un châssis de machine (2) en fonme de C pourvu d'un premier contre-palier (6) et d'un deuxième contre-palier (8) faisant face, dans lequel le deuxième contre-palier (8) supporte l'entraînement linéaire (18) à l'aide d'un porte-électrodes (10) et le premier contre-palier (6) supporte l'autre porte-électrodes (12) faisant face.

6. Dispositif de soudage selon l'une quelconque des revendications 1 à 5,
**caractérisé par** une structure en X, dans lequel au moins un des deux porte-électrodes (10, 12) peut être pivoté par l'intermédiaire d'une coulisse, l'entraînement linéaire venant en prise, à cet effet, directement ou indirectement au niveau de la coulisse.
